# DEMANDE DE BREVET EUROPEEN

(11) **EP 3 750 401 A1**
(43) Date de publication de la demande: **16.12.2020**
(21) Numéro de dépôt: 20176665.6
(22) Date de dépôt: 26.05.2020
(51) Int. Cl.: A01L 11/00, A01L 15/00

(54) **DISPOSITIF D'ENTRETIEN POUR SABOTS D'ANIMAUX ET PROCÉDÉ ASSOCIÉ**

(30) Priorité: 27.05.2019 FR 1905572
(71) Demandeur: Sterzinar, Pierre Henri, 20290 Vignale (FR)
(72) Inventeur: Sterzinar, Pierre Henri, 20290 Vignale (FR)
(74) Mandataire: Nicolle, Olivier

(57) **Abrégé**

Dispositif d'entretien pour sabots d'animaux, comprenant un corps formant manche (1), muni d'une partie de curage (4) équipée d'un crochet de curage (41) et d'une partie de graissage (5) équipée de moyens de graissage. La partie de curage (4) comprend en outre une brosse de nettoyage (421) disposée sur la partie de curage (4), à proximité du crochet de curage (41). Le corps formant manche (1) comprend une première structure allongée, rigide interne (2), solidaire dudit crochet de curage (41) et de la brosse de nettoyage (421) au niveau de la partie de curage (4). Le corps formant manche (1) comprend en outre une seconde structure externe souple (3), constituée d'une gaine souple creuse, la structure externe (3) étant apte à s'emboîter dans ladite structure interne (2) et ladite gaine souple creuse étant apte à contenir des moyens de graissage éjectables par compression manuelle de ladite gaine souple creuse.

## Description

La présente invention concerne un dispositif d'entretien pour sabots d'animaux et le procédé d'utilisation associé.

Elle trouve une application générale pour l'entretien des sabots d'animaux et plus particulièrement pour les opérations successives de curage, brossage, nettoyage et graissage des sabots d'animaux.

Actuellement, les opérations successives de curage, brossage, nettoyage et graissage des sabots d'animaux sont réalisées successivement à l'aide d'outils distincts. Ainsi, l'utilisateur fait la transition entre ces différents outils tout en répétant l'élévation du sabot, et par conséquent le pied dudit animal.

Le processus d'entretien reste donc complexe et fastidieux malgré la simplicité des outils utilisés.

On connait déjà un outil selon le document DE102009014650 qui permet de combiner les opérations de curage, de nettoyage, ainsi que l'application de certains produits liquides, notamment de type spray. Cet outil n'est en revanche pas adapté pour l'application de substances non liquides, tel que des substances graisseuses, de viscosité supérieure aux liquides généralement applicables à l'aide de ces dispositifs. Cet outil ne permet pas non plus une préhension optimisée, permettant l'enchainement des opérations de curage, de nettoyage et de graissage des sabots à l'aide d'un même outil, et de manière simple.

On connait un outil selon le document DE 29720254 U1 enseignant un dispositif d'entretien pour sabots d'animaux, comprenant une structure formant manche disposant d'un réservoir apte à contenir un produit d'entretien éjectable, ainsi qu'une partie de curage.

On connait aussi un outil selon le document US 2006/032458 A1 enseignant un outil de nettoyage pour animaux comportant une structure formant brosse ainsi qu'un réservoir compressible apte à éjecter un liquide de nettoyage.

De plus, les dispositifs d'entretien connus ne permettent pas de garantir un nettoyage satisfaisant de manière à ce que l'application de la graisse soit efficace et s'effectue à la suite des opérations de curage et nettoyage sans répéter l'action de levage du sabot de l'animal sur lequel on effectue l'entretien.

La présente invention remédie à ces inconvénients.

Elle porte sur un dispositif d'entretien pour sabots d'animaux, comprenant un corps formant manche, muni d'une partie de curage équipée d'un crochet de curage et d'une partie de graissage équipée de moyens de graissage.

Selon une définition générale de l'invention, la partie de curage comprend en outre une brosse de nettoyage disposée sur la partie de curage, à proximité du crochet de curage ;
le corps formant manche comprend une première structure allongée, rigide interne, solidaire dudit crochet de curage et de la brosse de nettoyage au niveau de la partie de curage ; et
le corps formant manche comprend en outre une seconde structure externe souple, constituée d'une gaine souple creuse, la structure externe étant apte à s'emboîter autour de ladite structure interne, et ladite gaine souple creuse étant apte à contenir des moyens de graissage éjectables par compression manuelle de ladite gaine souple creuse.

Ainsi, le dispositif d'entretien de sabot d'animaux conforme à l'invention est compact, simple d'utilisation à l'aide d'une seule main, peu couteux à produire, tout en permettant de faciliter l'entretien des sabots d'animaux par la mise à disponibilité de moyens de curage, de nettoyage et de graissage dans un même outil, lequel est utilisable en ne mobilisant qu'une seule main pendant les étapes d'entretien, permettant ainsi à l'utilisateur de ne pas avoir à reposer le sabot de l'animal pendant la procédure d'entretien.

Selon un mode de réalisation conforme à l'invention, la structure interne dudit manche est réalisée en une seule pièce.

En pratique, la partie de curage comporte des moyens de fixation aptes à fixer la brosse de nettoyage de manière interchangeable sur la partie de curage.

Selon un mode de réalisation de l'invention, la partie de curage est équipée de moyens de fixation aptes à fixer un crochet de curage de manière amovible sur la partie de curage.

Suivant un mode de mise en œuvre particulier de l'invention, les moyens de graissage comprennent :
- un embout d'éjection configuré pour être fixé au manche sur sa partie de graissage et comportant un orifice d'éjection apte à éjecter le produit d'entretien vers un adaptateur d'éjection ; et
- un pinceau d'application apte à être fixée sur l'adaptateur d'éjection.

Selon un mode de réalisation conforme à l'invention, l'embout d'éjection comprend une structure à molette apte à contrôler le diamètre de l'orifice d'éjection permettant de contrôler la quantité de produit d'entretien éjectée par la compression manuelle de la structure externe.

En pratique, la structure interne est composée d'un matériau appartenant au groupe formé par : l'acier, l'aluminium, le titane, polymères thermoplastiques hautes performance.

A titre d'exemple selon l'invention, les moyens de graissage appartiennent au groupe formé par : Onguent, graisse, huile.

En pratique, la structure externe souple emboîtée dans la structure interne comporte à chacune de ces extrémités des moyens d'étanchéité, apte à rendre le réservoir étanche.

La présente invention a également pour objet un procédé d'entretien manuel d'un sabot d'animal conforme à l'invention, à l'aide du dispositif d'entretien conforme à l'invention et comprenant les étapes suivantes :
a) mettre le sabot en position d'entretien ;
b) curer le sabot ainsi positionné à l'aide du crochet de curage ;
c) nettoyer à l'aide de la brosse de nettoyage, la zone ainsi curée ; et
d) après nettoyage, éjecter les moyens de graissage hors du dispositif de d'entretien par compression manuelle ;
e) appliquer le produit d'entretien ainsi éjecté à l'aide du pinceau d'application sur le sabot ainsi nettoyé, chaque étape b) à e) étant effectuée à l'aide d'un seul dispositif d'entretien, tout en conservant en continu ledit sabot à curer en position d'entretien.

Ainsi, le procédé d'entretien de sabot d'animaux conforme à l'invention est simple de mise en œuvre à l'aide d'une seule main, en permettant de faciliter l'entretien des sabots d'animaux par la mise à disponibilité de moyens de curage, de nettoyage et de graissage dans un même outil, lequel est utilisable en ne mobilisant qu'une seule main pendant les étapes d'entretien, permettant ainsi à l'utilisateur de ne pas avoir à reposer le sabot de l'animal pendant la procédure d'entretien.

D'autres avantages et caractéristiques de l'invention apparaitront à l'examen de la description et des dessins dans lesquels :
**[****Fig. 1****]** représente schématiquement le dispositif conforme à l'invention selon une coupe verticale ;
**[****Fig. 2****]** représente schématiquement la structure interne du dispositif conforme à l'invention ;
**[****Fig. 3****]** représente schématiquement la structure interne du dispositif équipée du crochet de curage conforme à l'invention ;
**[****Fig. 4****]** représente schématiquement la structure externe du dispositif conforme à l'invention ;
**[****Fig. 5****]** représente schématiquement l'embout d'éjection du dispositif selon l'invention ;
**[****Fig. 6****]** ; représente schématiquement l'adaptateur d'éjection du dispositif conforme à l'invention ;
**[****Fig. 7****]** représente schématiquement le pinceau d'application adaptable du dispositif selon l'invention ;
**[****Fig. 8****]** représente schématiquement le dispositif selon l'invention en vue éclatée ;

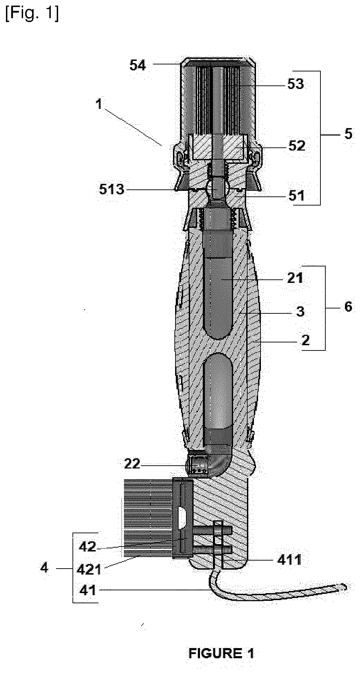

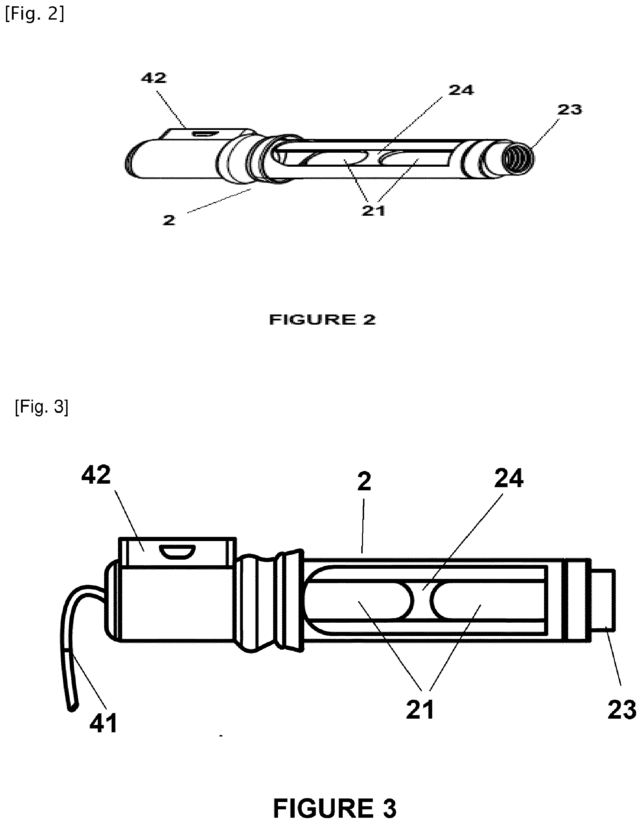

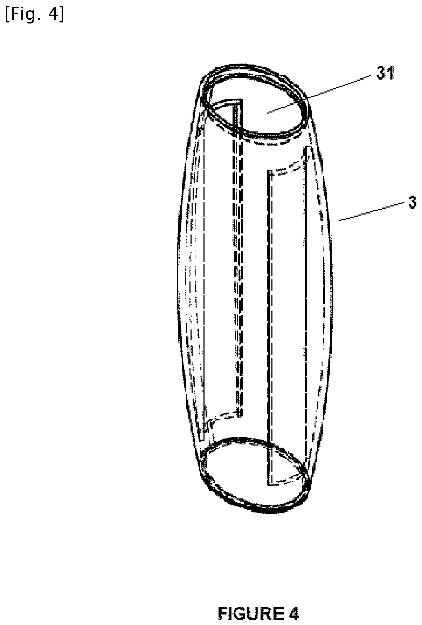

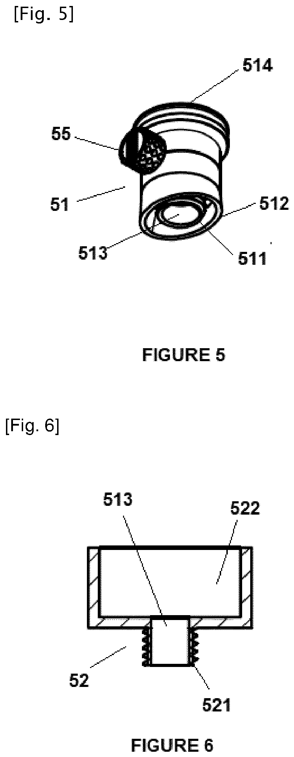

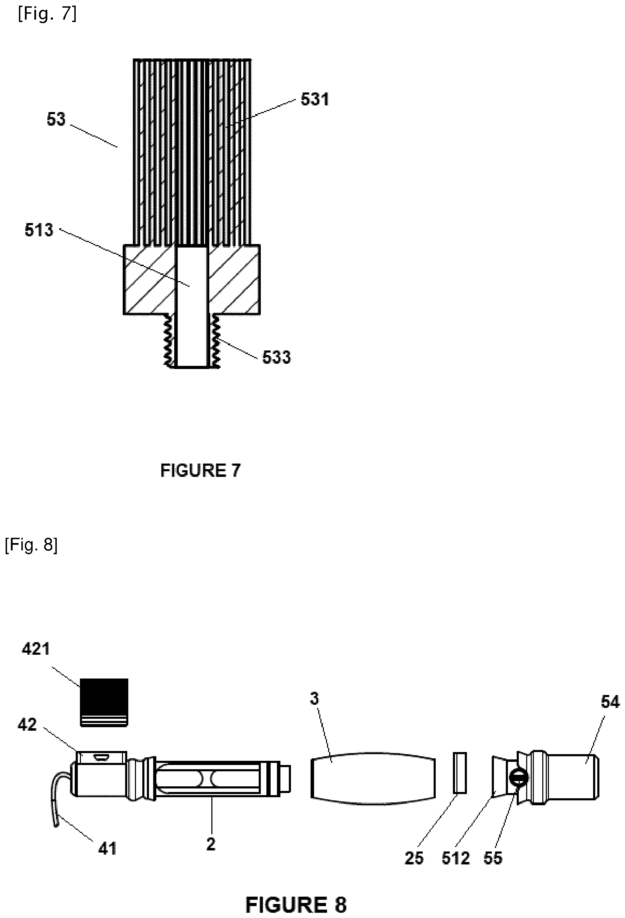

En référence aux **figures 1 à 8****,** le dispositif d'entretien pour sabot d'animaux selon l'invention comprend un élément formant manche (1), lequel comporte une structure rigide dite interne 2 formant âme, ainsi qu'une structure souple dite externe 3 formant gaine, configurée pour s'emboiter autour de la structure interne 2 pour former un réservoir 6.

Le dispositif conforme à l'invention comprend en outre une première extrémité de la structure interne 2 constituant une partie dite de curage 4, ainsi qu'une seconde extrémité constituant une partie dite de graissage 5.

La partie de curage 4 comprend les éléments nécessaires au curage du sabot, ainsi que son nettoyage et brossage, alors que la partie de graissage 5 comprend les éléments permettant l'application du produit d'entretien sur le sabot de l'animal.

La structure interne 2 est constituée d'une structure centrale 24, allongée et rigide, formant âme du dispositif. La structure centrale 24 comprend en outre au moins un évidemment transversal 21, s'étendant longitudinalement.

La structure interne 2 est configurée pour recevoir la partie externe 3 de forme complémentaire, de manière à ce que celle-ci forme une gaine autour de ladite structure centrale 24, formant ainsi un réservoir 6 apte à contenir un produit d'entretien.

Cette configuration permet une résistance mécanique du dispositif conforme à l'invention lors d'une manipulation tel que le curage des sabots d'animaux à entretenir.

La structure interne 2 est ensuite équipée solidairement, sur l'une de ses extrémités, d'une partie dite de curage 4, équipée de moyens de fixations 42 d'une brosse de nettoyage 421 sur une première face, ainsi que des moyens d'insertion 411 d'un crochet de curage 41 sur une seconde face.

En pratique, la brosse de nettoyage 421 est interchangeable et amovible, ceci afin permettre un renouvellement fréquent, ladite brosse 421 étant soumise à une usure rapide.

Selon un mode de réalisation conforme à l'invention, les moyens de fixation 42 de la brosse de nettoyage 421 sont solidaires des moyens d'insertion 411 du crochet de curage 41, permettant ainsi la fixation du crochet de curage 41.

A titre d'exemple non limitatif, le crochet de curage 41 est amovible, et interchangeable.

En pratique, le matériau composant la structure interne 2 appartient non limitativement au groupe formé par acier, aluminium, titane, polymères thermoplastiques hautes performance.

La structure interne 2 comporte en outre des moyens de vissage 23 sur sa seconde extrémité, apte à recevoir un ensemble fonctionnel constituant une partie dite de graissage 5.

Le dispositif conforme à l'invention comprend ensuite une structure dite externe 3 constituée d'une gaine souple creuse, intégrant un évidement central 31 s'étendant longitudinalement. L'évidemment central 31 étant de forme complémentaire à la partie centrale 24 de la structure interne 2, ladite structure interne 2 étant apte à s'insérer dans ladite structure externe, formant ainsi un réservoir 6 fermé au niveau de la partie de curage 4, et apte à recevoir un produit d'entretien pour sabot d'animaux.

L'assemblage de la structure interne 2 et de la structure externe 3 forme en outre une structure de type manche 1, laquelle permet d'une part la préhension manuelle du dispositif, et forme en outre un mécanisme de déplacement du produit d'entretien contenu dans ledit réservoir vers la partie de graissage 5.

Avantageusement, une compression appliquée sur la structure externe souple 3, déplaçant les parties comprimées dans au moins un des évidements 21 de la structure interne 2, permet de comprimer le produit d'entretien, provoquant son déplacement vers une sortie du réservoir 6 ainsi formé. Le mécanisme d'éjection ainsi formé par la combinaison des structures interne et externe est avantageusement adapté pour des produits d'entretien de haute viscosité, tel que des composés graisseux tel que l'onguent, ou sous forme de gel de viscosité moyenne, tel que les gels de graissage.

En pratique, la structure externe 3 est composé d'un matériau plastique de type élastomère appartenant non limitativement au groupe formé par co- ou terpolymères d'éthylène, propylène et diène (EPM et EPDM), copolymères d'isobutylène isoprène, chlorés ou bromés (IIR, BIIR, CIIR), copolymères de butadiène acrylonitrile (NBR), polychloroprènes (CR), caoutchoucs de silicone (VMQ, FVMQ), élastomères fluorés (FKM), polyéthylènes chlorés et chlorosulfonés (CM, CSM), polyacrylates (ACM), copolymères éthylène acétate de vinyle (EVM), éthylène acrylate de méthyle (AEM), caoutchoucs nitrile hydrogénés (HNBR), épichlorhydrines (CO, ECO, GECO), et polyuréthanes malaxables (AU, EU).

En outre, le produit d'entretien appartient non limitativement au groupe formé par onguent, graisse, huile.

Selon un mode de réalisation selon l'invention, la structure interne 2 comprend un mécanisme de remplissage 22 entre l'extrémité de la structure centrale 24 et la partie de curage 4Le mécanisme de remplissage 22 comporte une valve anti-retour, et permet le remplissage du réservoir 6 ainsi formé par l'assemblage de la structure interne 2 et de la structure externe 3. En référence aux **figures 1****,** **5****,** **6** **et** **8****,** la partie de graissage 5 comprend non limitativement des moyens de graissage parmi lesquels :
- un embout d'éjection 51 ;
- un pinceau d'application du produit d'entretien 53 ; et
- un adaptateur d'éjection 52.

L'ensemble fonctionnel formant la partie de graissage 5 comprend un conduit d'éjection 513, apte à guider l'éjection du produit d'entretien du réservoir 6, à l'extrémité du dispositif comportant le pinceau d'application 53.

Le conduit d'éjection 513 est constitué d'un assemblage d'éléments tubulaires intégrées centralement sur l'embout d'éjection 51, l'adaptateur d'éjection 52 et le pinceau d'application 53. Chaque élément tubulaire comprend des moyens de fixation aptes à permettre l'assemblage de la partie interne à l'embout d'éjection 51, ainsi que l'assemblage de l'adaptateur d'éjection 52 et le pinceau d'application 53.

Alternativement, le mécanisme de remplissage 22 comportant une valve anti-retour est supprimé, et le remplissage du réservoir est effectué via l'embout d'éjection 51 disposé à la base du pinceau d'application du produit d'entretien 53.

Non limitativement, les moyens de fixation permettant l'assemblage du conduit d'éjection 513 comprennent :
- les moyens de fixations 511/514 de l'embout d'éjection 51 ;
- les moyens de fixation 521/522 de l'adaptateur d'éjection 52 ; et
- les moyens de fixation 533 du pinceau d'application 53.

Les moyens de fixations appartiennent au groupe formé par moyens de vissage, moyens de clipsage, moyen de blocage.

L'embout d'éjection 51, est apte à être vissé au niveau des moyens de vissage 23 de l'extrémité dédiée de la structure interne 2, permettant ainsi de fermer le réservoir formé par l'assemblage des structures externe 3 et interne 2.

En pratique, une bague d'étanchéité 25 est disposée entre la partie de graissage 5 et la structure interne 2.

Alternativement, le dispositif selon l'invention dispose de deux bagues d'étanchéité 25, disposées l'une entre la partie de graissage 5 et la structure interne 2, et l'autre entre la partie de curage 4 et la partie interne 2.

L'embout d'éjection 51 du dispositif conforme à l'invention comprend ainsi une première partie du conduit d'éjection 513, disposée sur la base 512 dudit embout d'éjection 51, et équipée de moyens de fixation 511 aptes à être montés sur les moyens de vissage 23 de la structure interne 2.

Les moyens de fixations sont assemblés de manière à ce qu'une fois l'opération de vissage terminée, l'embout d'éjection 51 agisse comme un moyen d'étanchéité supplémentaire autour des pièces fixées.

La première partie du conduit d'éjection 513 s'étend jusqu'à la partie supérieure dudit embout d'éjection 51, et est apte à guider le produit d'entretien éjecté vers l'extérieur du dispositif.

L'embout d'éjection 51 comprend en outre une structure à molette 55 apte à contrôler le diamètre de l'orifice d'éjection 513, celle-ci permet en outre de contrôler la quantité de produit d'entretien éjectée lors de la compression manuelle de la structure externe 3 du dispositif.

Enfin, l'orifice d'éjection 513 comprend des moyens de fixation 514, disposée au niveau de la partie supérieure de l'embout d'éjection 51 aptes à être fixés à des moyens de fixation complémentaires de l'élément que l'utilisateur choisit de fixer.

Selon un mode de réalisation conforme à l'invention, les moyens de fixation 514 de la partie supérieure 514 de l'embout d'éjection 51 sont aptes à fixer les moyens de fixation 533 du pinceau d'application 53.

Le pinceau d'application 53 comprend une seconde partie tubulaire du conduit d'éjection 513 disposée centralement. L'assemblage du pinceau d'application 53 avec l'ensemble adaptateur d'éjection 51/réservoir 6 permet l'extension du conduit d'éjection 513 jusqu'à la base d'un pinceau 531 du pinceau d'application 53.

La compression de la partie externe 3 souple, permet alors le déplacement du produit d'entretien vers l'embout d'éjection 51, par lequel la quantité éjectée est contrôlée par réglage de la molette 55, ledit produit d'entretien étant ensuite éjecté à la base du pinceau d'application 52, l'utilisateur pouvant donc appliquer directement le produit sur le sabot à entretenir.

Selon un autre mode de réalisation selon l'invention, les moyens de fixation 514 de la partie supérieure de l'embout d'éjection 51 sont aptes à fixer l'adaptateur d'éjection 52 sur des moyens de fixation complémentaires 521, permettant une application brute du produit d'entretien ainsi éjectée.

L'adaptateur d'éjection 52 comprend en outre une structure élargie 522 au niveau de laquelle le produit d'entretien est apte à être éjecté.

Selon encore un autre mode de réalisation alternatif conforme à l'invention, les moyens de fixation 514 de la partie supérieure de l'embout d'éjection 51 sont aptes à fixer l'adaptateur d'éjection 52, sur lequel est ensuite fixé le pinceau d'application 53.

La structure élargie de l'adaptateur d'éjection 52 est configurée pour recevoir les moyens de fixation 533 du pinceau d'application 53. Cet assemblage permet l'allongement du dispositif, et ainsi permettre une meilleure préhension lors de l'application du produit d'entretien. Ledit assemblage permet aussi l'extension du conduit d'éjection 513, permettant ainsi l'amélioration du contrôle de la quantité de produit d'entretien éjecté.

Le dispositif conforme à l'invention comprend en outre un bouchon de protection 54, disposé sur le pinceau d'application 53 afin de protéger ladite brosse 53, et empêcher l'oxydation accélérée du produit d'entretien imbibant le pinceau d'application 53 après utilisation.

D'autre part, l'invention a pour objet un procédé d'entretien manuel d'un sabot d'animal, à l'aide du dispositif conforme à l'invention.

Une première étape a) consiste à mettre le sabot de l'animal à entretenir en position d'entretien. On entend ici par position d'entretien, le levage de la jambe de l'animal, afin que le sabot à entretenir soit disposé à une hauteur raisonnable pour que l'utilisateur puisse le positionner et le maintenir dans une main.

Une seconde étape b) du procédé consiste à curer le sabot ainsi positionné à l'aide du crochet de curage 41 du dispositif tenu dans l'autre main au niveau du manche 1.

Une troisième étape c) du procédé consiste à nettoyer la zone ainsi curée à l'aide de la brosse de nettoyage 421 afin d'éliminer tout débris restant après l'étape de curage, ceci afin de maximiser l'adhérence du produit d'entretien.

Une quatrième étape d) du procédé conforme à l'invention consiste éjecter le produit d'entretien hors du dispositif par compression de la partie externe souple 3, permettant de forcer l'éjection du produit d'entretien au niveau de le pinceau d'application 52.

Une étape suivante e) consiste à appliquer le produit d'entretien ainsi éjecté à l'aide du pinceau d'application 52 sur le sabot ainsi nettoyé.

Avantageusement, le dispositif dispose d'une structure permettant à l'utilisateur d'effectuer les étapes b) à e) conforme à l'invention, tout en conservant la même prise en main du dispositif.

En outre, les moyens de curage, de nettoyage, d'éjection, et d'application étant avantageusement disposés de manière à ne pas avoir d'outil supplémentaire à prendre, l'utilisateur n'a pas à poser le sabot pendant la procédure d'entretien, permettant ainsi de maintenir en continu ledit sabot en position d'entretien durant chaqu'une des étapes du procédé conforme à l'invention.

## Revendications

1. [Dispositif d'entretien pour sabots d'animaux, comprenant un corps formant manche (1), muni d'une partie de curage (4) équipée d'un crochet de curage (41) et d'une partie de graissage (5) équipée de moyens de graissage ; **caractérisé en ce que** la partie de curage (4) comprend en outre une brosse de nettoyage (421) disposée sur la partie de curage (4), à proximité du crochet de curage (41) ; **en ce que** le corps formant manche (1) comprend une première structure allongée, rigide interne (2), solidaire dudit crochet de curage (41) et de la brosse de nettoyage (421) au niveau de la partie de curage (4), comprenant au moins un évidement (21) transversal s'étendant longitudinalement,; et **en ce que** le corps formant manche (1) comprend en outre une seconde structure externe souple (3), constituée d'une gaine souple creuse, la structure externe (3) étant apte à s'emboîter autour de ladite structure interne (2) formant réservoir, et ladite gaine souple creuse étant apte à contenir des moyens de graissage éjectables par compression manuelle de ladite gaine souple creuse.

2. Dispositif selon la revendication 1, **caractérisé en ce que** la structure interne (2) dudit corps formant manche (1) est réalisée en une seule pièce.

3. Dispositif selon la revendication 1, ou la revendication 2, **caractérisé en ce que** la partie de curage (4) comporte des moyens de fixation (42) aptes à fixer la brosse de nettoyage (421) de manière interchangeable sur la partie de curage (4).

4. Dispositif selon l'une des revendications 1 à 3, **caractérisé en ce que** la partie de curage (4) est équipée de moyens de fixation (411) aptes à fixer un crochet de curage (41) de manière amovible sur la partie de curage (4).

5. Dispositif selon la revendication 1, **caractérisé en ce que** les moyens de graissage comprennent :
- un embout d'éjection (51) configuré pour être fixé au manche (1) sur la partie de graissage (5) et comportant un orifice d'éjection (513) apte à éjecter le produit d'entretien vers un adaptateur d'éjection (52) ; et
- un pinceau d'application (53) apte à être fixée sur l'adaptateur d'éjection (52).

6. Dispositif selon la revendication 5, **caractérisé en ce que** l'embout d'éjection (51) comprend une structure à molette (55) apte à contrôler le diamètre de l'orifice d'éjection (513) permettant de contrôler la quantité de produit d'entretien éjectée par la compression manuelle de la structure souple externe (3).

7. Dispositif selon l'une quelconque des revendications précédentes **caractérisé en ce que** la structure interne (2) est composée d'un matériau appartenant au groupe formé par : l'acier, l'aluminium, le titane, polymères thermoplastiques hautes performance.

8. Dispositif selon l'une quelconque des revendications précédentes, caractérisé en ce les moyens de graissage appartiennent au groupe formé par : onguent, graisse, huile.

9. Dispositif selon l'une quelconque des revendications précédentes, **caractérisé en ce que** la structure externe souple (3) emboîtée dans la structure interne (2) comporte à chacune de ses extrémités des moyens d'étanchéité (25).

10. Procédé d'entretien manuel d'un sabot d'animal, à l'aide du dispositif d'entretien selon l'une des revendications 1 à 9 , **caractérisé en ce que** le procédé d'entretien comprend les étapes suivantes :
a) placer le sabot en position d'entretien ;
b) curer le sabot ainsi positionné à l'aide du crochet de curage ;
c) nettoyer à l'aide de la brosse de nettoyage la zone ainsi curée; et
d) après nettoyage, éjecter le produit d'entretien hors du dispositif de d'entretien par compression manuelle ;
e) appliquer le produit d'entretien ainsi éjecté à l'aide du pinceau d'application sur le sabot ainsi nettoyé, chaque étape b) à e) étant effectuée à l'aide d'un seul dispositif d'entretien, tout en conservant en continu ledit sabot à curer en position d'entretien.
